**Europäisches Patentamt**

**European Patent Office**

**Office européen des brevets**

(11) Veröffentlichungsnummer: **0 119 466**
A1

# EUROPÄISCHE PATENTANMELDUNG

(21) Anmeldenummer: **84101531.6**

(22) Anmeldetag: **15.02.84**

(51) Int. Cl.³: **F 16 D 55/224**

(30) Priorität: **15.02.83 DE 8304138 U**

(43) Veröffentlichungstag der Anmeldung: **26.09.84**
**Patentblatt 84/39**

(84) Benannte Vertragsstaaten: **DE FR GB IT**

(71) Anmelder: **LUCAS INDUSTRIES public limited company, Great King Street, Birmingham, B19 2XF (GB)**

(72) Erfinder: **Rath, Heinrich Bernhard, Sebastian-Kneipp-Strasse 73a, D-5414 Vollendar (DE)**
Erfinder: **Danne, Ulrich Wilhelm, Weiserstrasse 44, D-5413 Bondorf-Sayn (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

(54) Teilbelag-Scheibenbremse für Fahrzeuge.

(57) Ein Bremsträger (12) umgreift den Rand einer Bremsscheibe (10) und führt ein Paar Bremsbacken (40, 44), die auf je einer Seite der Bremsscheibe (10) angeordnet sind. Am Bremsträger (12) ist ein Paar Führungsbolzen (16, 26) parallel zur Bremsscheibenachse (A) in unterschiedlichen radialen Abständen von dieser angeordnet. Auf den Führungsbolzen (16, 26) ist ein Sattel (20) verschiebbar geführt. Eine Betätigungsvorrichtung (36), die auf die eine Bremsbacke (40) unmittelbar und auf die andere Bremsbacke (44) über den Sattel (20) einwirkt, hat eine Betätigungsachse (B), die zusammen mit der Bremsscheibenachse (A) eine radiale Mittelebene (C) definiert. Der Bremsträger (12) hat Führungsflächen (52, 54) für die Bremsbacken (40, 44) nur auf derjenigen Seite der Mittelebene (C), die, bezogen auf die Drehrichtung (D) der Bremsscheibe (10) bei Vorwärtsfahrt, die Ablaufseite ist. Um Platz und Gewicht zu sparen, sind die Führungsbolzen (16, 26) beide in Abständen von der Mittelebene (C) auf der Ablaufseite angeordnet.

FIG. 2

0119466

PATENTANWÄLTE
WUESTHOFF - v. PECHMANN - BEHRENS - GOETZ
EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

EP-57 850
Lucas Industries plc

D-8000 MÜNCHEN 90
SCHWEIGERSTRASSE 2

TELEFON: (089) 66 20 51
TELEGRAMM: PROTECTPATENT
TELEX: 5 24 070

15. Februar 1984

## Teilbelag-Scheibenbremse für Fahrzeuge

Die Erfindung betrifft eine Teilbelag-Scheibenbremse für
Fahrzeuge mit

- einem Bremsträger, der den Rand einer Bremsscheibe umgreift,
- einem Paar Bremsbacken, die auf je einer Seite der
Bremsscheibe angeordnet und am Bremsträger geführt sind,
- einem Paar Führungsbolzen, die am Bremsträger mindestens annähernd parallel zur Bremsscheibenachse in unterschiedlichen radialen Abständen von dieser angeordnet sind,
- einem Sattel, der auf den Führungsbolzen verschiebbar
ist,
- und einer Betätigungsvorrichtung, die auf die eine
Bremsbacke unmittelbar und auf die andere Bremsbacke
über den Sattel einwirkt und eine Betätigungsachse hat,
die zusammen mit der Bremsscheibenachse eine radiale
Mittelebene der Bremsbacken definiert,
- wobei der Bremsträger Führungsflächen für die Bremsbacken nur auf derjenigen Seite der Mittelebene aufweist, die, bezogen auf die Drehrichtung der Bremsscheibe bei Vorwärtsfahrt, die Ablaufseite ist.

Es sind Scheibenbremsen dieser Gattung bekannt (DE-A-
28 07 620 und DE-A-31 32 796), bei denen einer der Füh-

- 2 -

rungsbolzen in der Mittelebene angeordnet ist, in der auch die Achsen der Betätigungsvorrichtung und der Bremsscheibe liegen. Solche Bremsen sind für Motorräder vorgesehen; für Personen- und Lastkraftwagen sind sie kaum geeignet, da sie in dem engen Zwischenraum zwischen Radlager und Radfelge solcher Fahrzeuge schwer unterzubringen sind.

Der Erfindung liegt die Aufgabe zugrunde, eine Scheibenbremse der eingangs beschriebenen Gattung derart weiterzubilden, daß ihr Gewicht und Platzbedarf gegenüber bekannten Bremsen bei gegebenen Anforderungen an die Bremsleistung vermindert sind.

Die Aufgabe ist erfindungsgemäß dadurch gelöst, daß die Führungsbolzen beide in Abständen von der Mittelebene auf der Ablaufseite angeordnet sind.

Damit wird erreicht, daß zumindest der Bremsträger weniger Platz beansprucht und ein geringeres Gewicht aufweist als bei bekannten Bremsen der eingangs beschriebenen Gattung. Auch der Bremssattel läßt sich infolge der einseitigen Anordnung der Führungsbolzen raum- und gewichtssparend gestalten, wenn man die Tatsache berücksichtigt, daß beim Bremsen aus Rückwärtsfahrt Umfangskräfte auftreten, die höchstens etwa halb so groß sind wie die größten beim Bremsen aus Vorwärtsfahrt auftretenden Umfangskräfte. Dies gilt vor allem für Vorderradbremsen, denn die Vorderräder werden bei einer Bremsung aus Rückwärtsfahrt entlastet und können wegen ihrer dadurch verminderten Bodenhaftung ohnehin nur geringere Bremskräfte auf die Fahrbahn übertragen als bei einer Bremsung aus Vorwärtsfahrt.

Der Bremsträger ist deshalb vorzugsweise ausschließlich an der Ablaufseite angeordnet und beginnt dort erst in einem Abstand von der Mittelebene.

Die gemeinsame Ebene der geometrischen Achsen der beiden
Führungsbolzen enthält vorzugsweise zumindest annähernd
auch die Bremsscheibenachse. Mit anderen Worten läßt
sich eine die Bremsscheibenachse enthaltende Ebene derart legen, daß sie die Querschnitte beider Führungsbolzen wenn nicht halbiert so doch sehnenförmig anschneidet
oder zumindest tangiert.

Eine besonders vorteilhafte weitere Ausgestaltung der
Erfindung besteht darin,
- daß der radial äußere Führungsbolzen nahe der Wirkungslinie der resultierenden Umfangskraft auf der Auflaufseite der Bremsbacken liegt
- und der andere Führungsbolzen radial innerhalb der
Wirkungslinie der resultierenden Umfangskraft auf der
Ablaufseite der Bremsbacken in einem Abstand von dieser
Wirkungslinie angeordnet ist, der ungefähr halbsogroß
ist wie der Abstand der Führungsbolzen voneinander.

Dabei liegt der radial äußere Führungsbolzen vorzugsweise in geringem Abstand radial innerhalb der Wirkungslinie der resultierenden Umfangskraft auf der Auflaufseite
der Bremsbacken und der andere Führungsbolzen liegt soweit radial innerhalb der Wirkungslinie der resultierenden Umfangskraft auf der Ablaufseite der Bremsbacken,
daß die bei Rückwärtsfahrt auftretenden Umfangskräfte zu
65 bis 80 % vom äußeren Führungsbolzen und nur zu 35 bis
20 % vom inneren Führungsbolzen aufgenommen werden.

Ferner ist die erfindungsgemäße Bremse vorzugsweise
dadurch weitergebildet,
- daß der Sattel an der Seite, die bei Vorwärtsfahrt die
Auflaufseite ist, eine der Mittelebene zugewandte Führungsfläche aufweist, an der sich je ein über den Rand
der Bremsscheibe hinausragender Vorsprung der beiden
Bremsbacken beim Bremsen bei Rückwärtsfahrt abstützt,

- und der Bremsträger an der Ablaufseite Führungsflächen
aufweist, die sich zumindest annähernd normal zur Mittelebene erstrecken.

Die angestrebte, Gewicht und Platz sparende Bauweise
wird noch weiter gefördert, wenn der Abstand der beiden
Führungsbolzen voneinander kleiner ist als die in Umfangsrichtung der Bremsbacken gemessene größte Länge
von deren mit der Bremsscheibe zusammenwirkenden Teilen.

Besonders vorteilhaft ist es, wenn der Abstand der beiden Führungsbolzen voneinander ungefähr so groß ist wie
die in radialer Richtung der Bremsscheibe gemessene
größte Breite von deren mit der Bremsscheibe zusammenwirkenden Teilen.

Ausführungsbeispiele der Erfindung werden im folgenden
anhand schematischer Zeichnungen mit weiteren Einzelheiten beschrieben. Es zeigt:

Fig. 1    eine Seitenansicht einer ersten Teilbelag-
          Scheibenbremse für einen Personenkraftwagen,
          von dessen innerer Seite aus betrachtet,
Fig. 2    die entgegengesetzte Seitenansicht,
Fig. 3    die Ansicht der Scheibenbremse radial von
          außen, in Richtung des Pfeils III in Fig.2,
Fig. 4    den Axialschnitt IV-IV in Fig.3,
Fig. 5    den Teilschnitt V-V in Fig.1,
Fig. 6    den Teilschnitt VI-VI in Fig.1,
Fig. 7    Teile der Bremse in einem Kräftediagramm,
Fig. 8    weitere Teile in einem Kräftediagramm,
Fig. 9    eine zweite Teilbelag-Scheibenbremse in einer

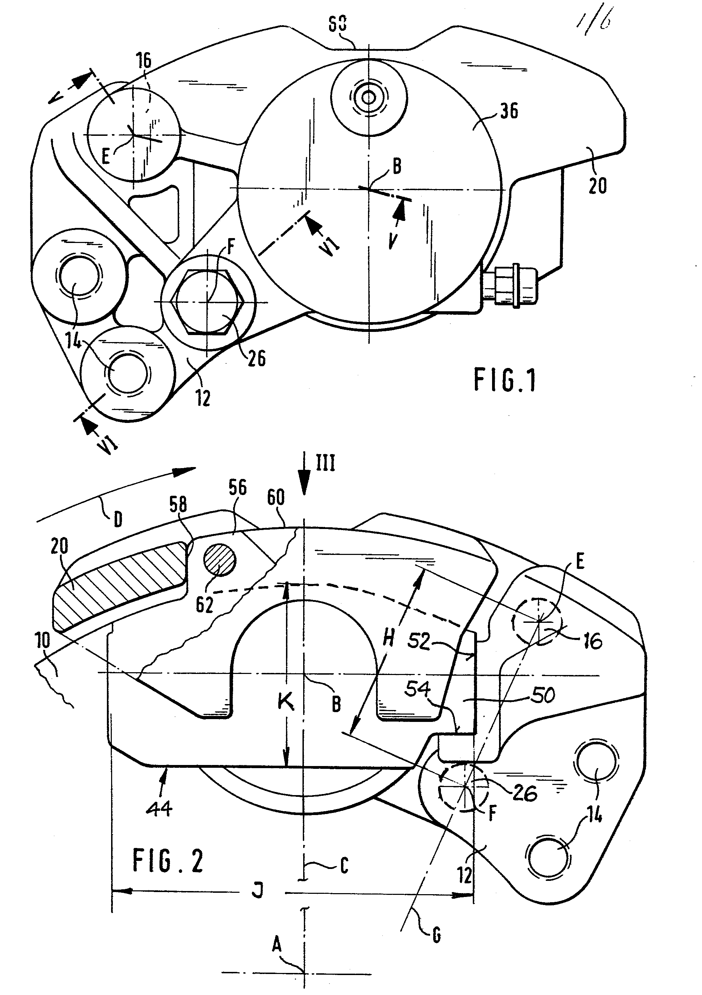

          der Fig.2 entsprechenden Ansicht,

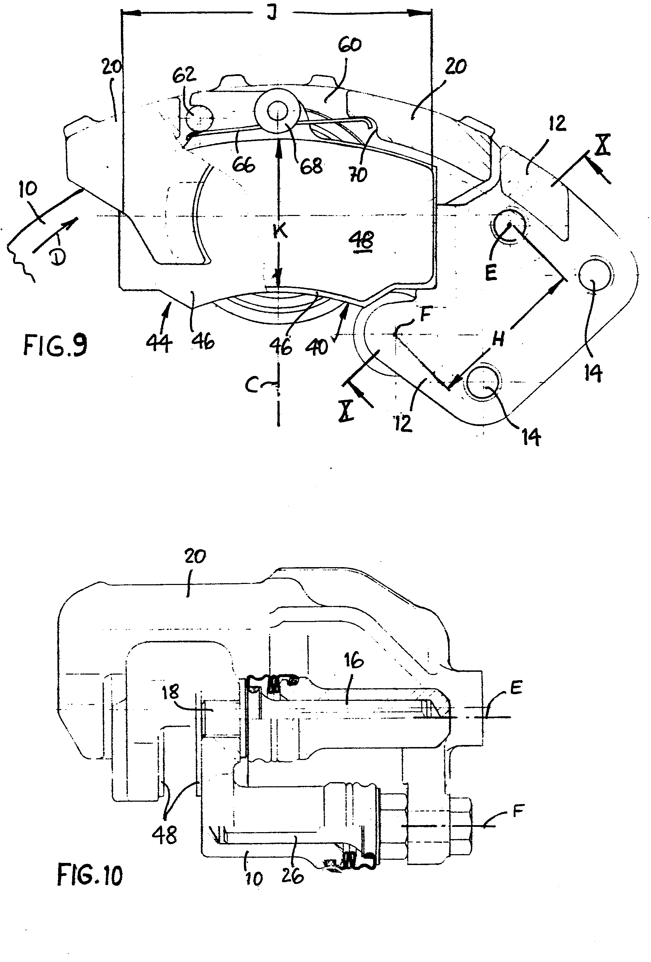

Fig.10    den Schnitt X-X in Fig.9,

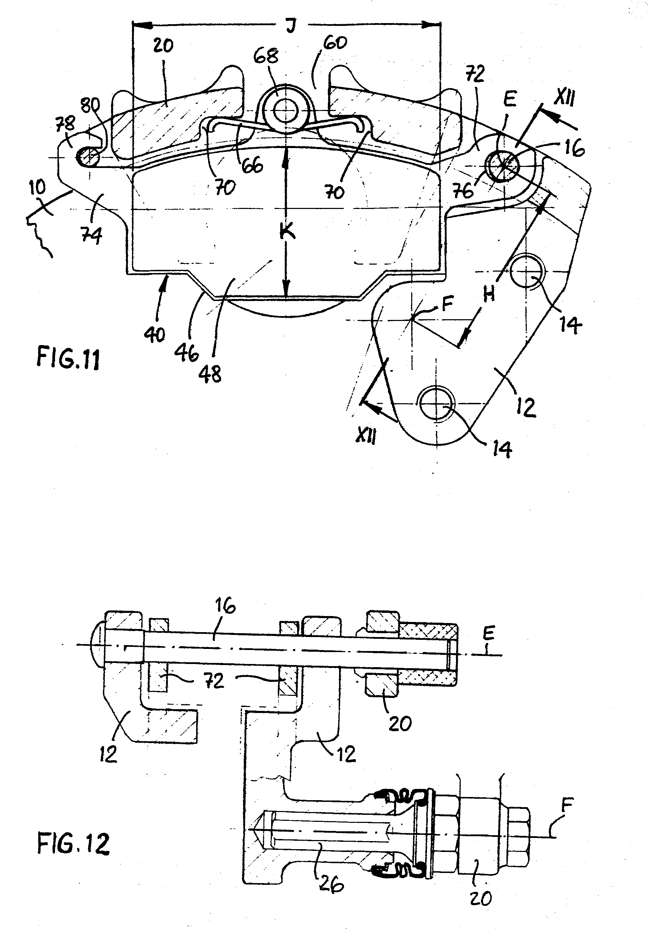

Fig.11    eine dritte Teilbelag-Scheibenbremse in einer
          der Fig.2 entsprechenden Ansicht,
Fig.12    den Schnitt XII-XII in Fig.11.

0119466

- 5 -

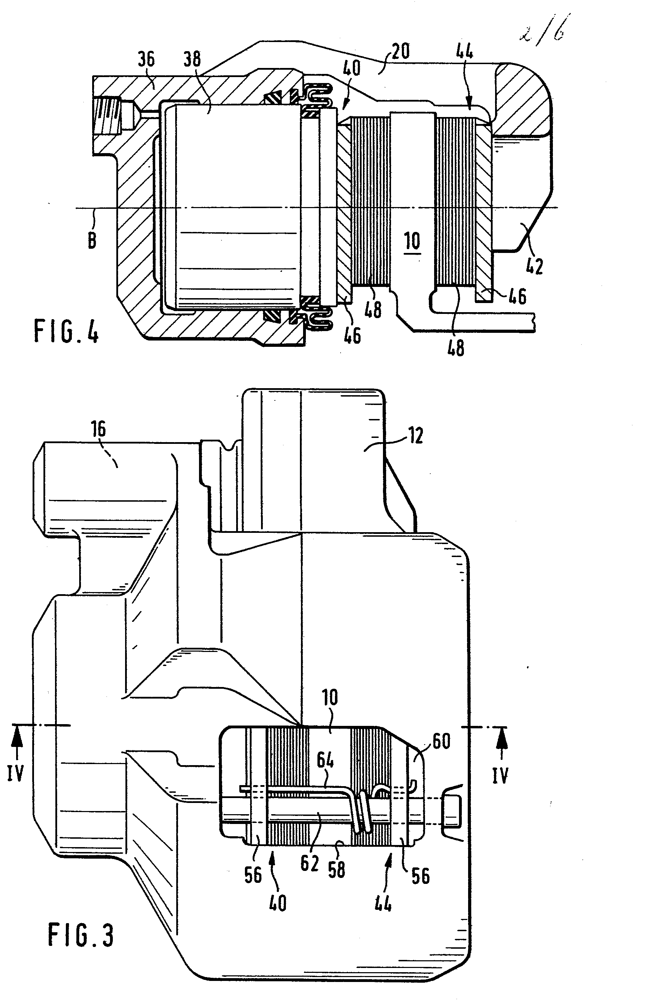

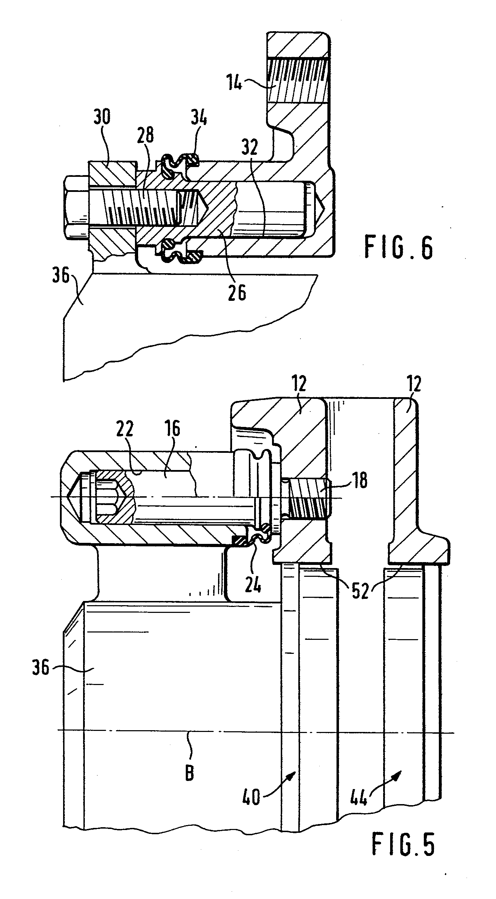

Die in Fig.1 bis 8 dargestellte Bremse ist einer Bremsscheibe 10 zugeordnet, von der nur ein Teil ihres äußeren Randes und die Bremsscheibenachse A angedeutet sind.
Zur Bremse gehört ein Bremsträger 12, der zwei Gewindelöcher 14 zur Befestigung an einem Achsschenkel od.dgl.
aufweist.

An der in bezug auf das Fahrzeug inneren Seite des
Bremsträgers 12 ist ein radial äußerer, zur Bremsscheibenachse A paralleler Führungsbolzen 16 mittels eines an
ihm ausgebildeten Gewindezapfens 18 starr befestigt. Auf
dem Führungsbolzen 16 ist ein Sattel 20 mittels einer an
ihm ausgebildeten Führungsbohrung 22 parallel zur Bremsscheibenachse A verschiebbar geführt. Die Führungsbohrung 22 ist mit einer Manschette 24 gegen den Führungsbolzen 16 abgedichtet.

Parallel zum radial äußeren Führungsbolzen 16 ist ein
radial innerer Führungsbolzen 26 angeordnet, der mit
einer Schraube 28 an einem Ansatz 30 des Sattels 20 befestigt und in einer Führungsbohrung 32 des Bremsträgers
12 geführt ist. Die Schraube 28 erstreckt sich mit radialem Spiel durch eine Bohrung im Ansatz 30; dieses
Spiel ermöglicht es, herstellungsbedingte Abstandstoleranzen zwischen den beiden Führungsbolzen 16 und 26 und
deren Führungsbohrungen 22 und 32 auszugleichen, ehe die
Schraube 28 festgezogen und dadurch der Führungsbolzen
26 reibschlüssig am Sattel 20 befestigt wird. Die Führungsbohrung 32 ist mit einer Manschette 34 gegen den
Führungsbolzen 26 abgedichtet.

Der Sattel 20 umgreift den Rand der Bremsscheibe 10 und
weist an seiner in bezug auf das Fahrzeug inneren Seite
eine hydraulische Betätigungsvorrichtung 36 auf, deren
Achse sich parallel zur Bremsscheibenachse A erstreckt
und im folgenden als Betätigungsachse B bezeichnet wird.

Die gemeinsame Ebene der beiden Achsen A und B wird im folgenden als Mittelebene C bezeichnet. Die Drehrichtung der Bremsscheibe 10 bei Vorwärtsfahrt des zugehörigen Fahrzeugs ist in Fig.2 mit einem Pfeil D angedeutet. Diejenige Seite der Bremse und jedes ihrer Bauteile, die von einem beliebigen Punkt der Bremsscheibe 10 bei Vorwärtsdrehung zuerst erreicht wird, ist die Auflaufseite; die andere, von der Auflaufseite aus jenseits der Mittelebene C gelegene Seite ist die Ablaufseite.

Mit den vorstehenden Definitionen läßt sich feststellen, daß der Bremsträger 12 ausschließlich auf der Ablaufseite der Bremse angeordnet ist und dort erst in einem erheblichen Abstand von der Mittelebene C beginnt. Dementsprechend sind auch die Führungsbolzen 16 und 26 beide an der Ablaufseite der Bremse angeordnet; ihre geometrischen Achsen E und F liegen in einer Ebene G, welche die Mittelebene C, von der Betätigungsachse B aus gesehen, in geringem Abstand jenseits der Bremsscheibenachse A schneidet. Die beiden Führungsbolzen 16 und 26 haben voneinander einen Abstand H, der definiert ist als der Abstand zwischen den Achsen E und F.

Die Betätigungsvorrichtung 36 hat einen Kolben 38, mit dem sich eine erste Bremsbacke 40 unmittelbar betätigen, d.h. an die eine Seite der Bremsscheibe 10 anpressen läßt. Der Sattel 20 weist an der anderen Seite der Bremsscheibe 10 einen gabelförmigen Schenkel 42 auf, mit dem sich eine zweite Bremsbacke 44 mittelbar, d.h. durch axiale Verschiebung des Sattels 20, betätigen läßt.

Die Bremsbacken 40 und 44 weisen wie üblich je eine Rückenplatte 46 und einen Bremsbelag 48 auf. Bei jeder der beiden Bremsbacken 40 und 44 hat der Bremsbelag 48, in Umfangsrichtung der Bremsscheibe 10 gemessen, eine größte Länge J, die größer ist als der Abstand H zwischen den beiden Führungsbolzen 16 und 26. Der Bremsbelag 48
hat ferner, in radialer Richtung der Bremsscheibe 10
gemessen, eine größte Breite K, die ungefähr so groß ist
wie der Abstand H.

An der Ablaufseite jeder der beiden Bremsbacken 40 und
44 ist eine Schulter 50 ausgebildet. Der Bremsträger 12
umgreift die Bremsscheibe 10 und weist beiderseits von
dieser je eine zur Mittelebene C parallele Führungsfläche 52 und je eine dazu senkrechte Führungsfläche 54
auf. Jede der beiden Bremsbacken 40 und 44 liegt mit
ihrer entsprechend rechtwinklig gestalteten Schulter 50
an diesen beiden Führungsflächen 52 und 54 an.

An der Auflaufseite jeder der beiden Bremsbacken 40 und
44 ist an deren Rückenplatte 46 ein nach oben ragender
Vorsprung 56 ausgebildet. Diesen Vorsprüngen 56 beider
Bremsbacken 40 und 44 ist eine gemeinsame, zur Mittelebene C parallele Führungsfläche 58 zugeordnet, die an
der Auflaufseite des Sattels 20 ausgebildet und der Mittelebene C zugewandt ist. Die Führungsfläche 58 begrenzt
eine Inspektionsöffnung 60 im Sattel 20. Radial innerhalb der Inspektionsöffnung 60 erstreckt sich parallel
zur Betätigungsachse B ein Sicherungsstift 62 mit radialem Spiel durch je ein Loch in den Vorsprüngen 56
beider Bremsbacken 40 und 44 hindurch. Die Enden des Sicherungsstifts 62 sind am Sattel 20 befestigt. Der Sicherungsstift 62 trägt eine Feder 64, die beide Bremsbacken 40 und 44 niederdrückt und bestrebt ist, deren
Schultern an den zugehörigen Führungsflächen 52 und 54
anliegend zu halten.

Bei Bremsung aus Vorwärtsfahrt werden die auf die Bremsbacken 40 und 44 einwirkenden Umfangskräfte alleine von
den Führungsflächen 52 am Bremsträger 12 aufgenommen.
Bei Bremsung aus Rückwärtsfahrt stützen sich die beiden Bremsbacken 40 und 44 dagegen mit ihrem Vorsprung 56 an
der Führungsfläche 58 des Sattels 20 ab und zugleich mit
ihrer Schulter 50 an der Führungsfläche 54 des Bremsträgers 12. Die dabei vom Sattel 20 aufgenommenen Umfangskräfte werden über die Führungsbolzen 16 und 26 auf den
Bremsträger 12 übertragen. Dabei überträgt der Führungsbolzen 16 etwa 72 % der gesamten Umfangskraft U, während
der Führungsbolzen 26 nur etwa 28 % dieser Kraft überträgt.

Die gesamte Umfangskraft U wird zu im wesentlichen gleichen Teilen von beiden Bremsbacken 40 und 44 geliefert.
Der auf jede einzelne Bremsbacke entfallende Teil der
gesamten Umfangskraft läßt sich als Summe zweier Umfangskräfte U1 und U2 denken, die an je einer Bremsbakkenhälfte entstehen, nämlich U1 an der bei Vorwärtsdrehrichtung auflaufenden Hälfte und U2 an der ablaufenden
Hälfte. Die Vektoren dieser beiden Teilumfangskräfte U1
und U2 schließen miteinander einen Winkel ein, der von
der Umfangslänge der betreffenden Bremsbacke abhängt.
Verlängert man die Wirkungslinien der Teilumfangskräfte
U1 und U2, so bilden sie einen Winkel. Innerhalb dieses
Winkels, nahe dem radial äußeren Schenkel U1, liegt die
Achse E des radial äußeren Führungsbolzens 16; die Achse
F des radial inneren Führungsbolzens 26 liegt dagegen
radial innerhalb der Wirkungslinie von U2 in einem Abstand von dieser Wirkungslinie, der etwas kleiner als
halbsogroß wie der Abstand der Achsen E und F voneinander ist.

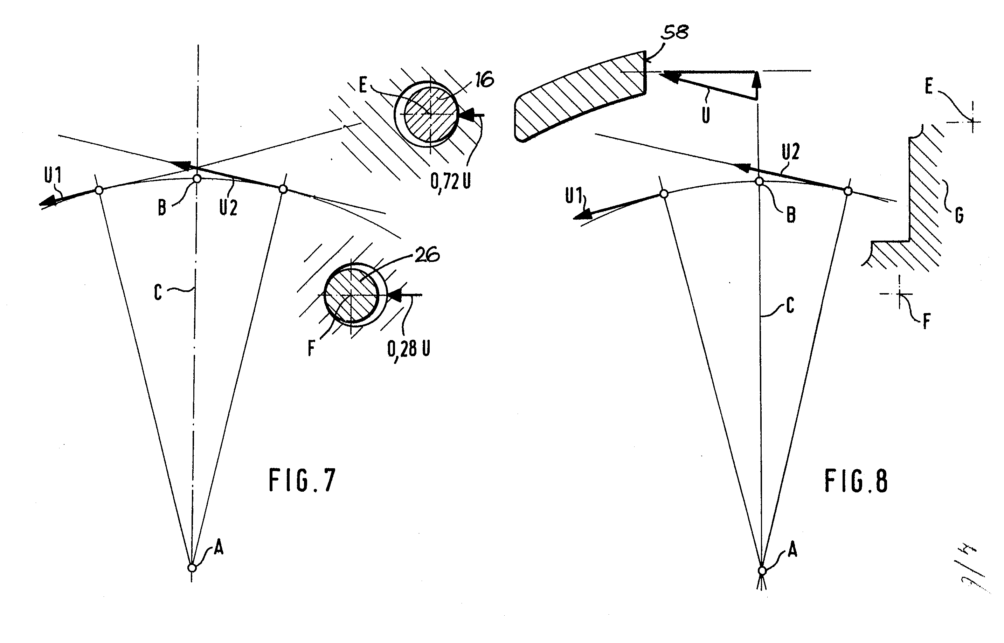

Bei einer kräftigen Bremsung unterliegen bestimmte Teile
der Bremse elastischen Formänderungen; vor allem weitet
sich der Sattel 20. Diese Formänderungen haben zur Folge, daß die Achsen E und F in dem Diagramm gemäß Fig.7
weiter radial nach innen wandern, so daß bei einer besonders kräftigen Bremsung aus Rückwärtsfahrt der radial äußere Führungsbolzen 16 mehr als 75 %, möglicherweise
bis zu 80 %, der gesamten Umfangskraft U zu übertragen
hat, während der radial innere Führungsbolzen 26 nur mit
weniger als 25 %, möglicherweise nur 20 %, dieser gesamten Umfangskraft U belastet wird.

Wenn die Bremsbacken 40 und 44 ausgewechselt werden sollen, wird die Schraube 28 gelöst und anschließend der
Sattel 20 samt beiden Bremsbacken um den radial äußeren
Führungsbolzen 16 nach außen geschwenkt. Schließlich
wird der Sicherungsstift 62 aus dem Sattel 20 herausgezogen; die Bremsbacken 40 und 44 lassen sich dann entnehmen. Bei alldem braucht keiner der Führungsbolzen 40,
44 aus seiner Führungsbohrung 22 bzw. 32 herausgezogen
zu werden; die Führungen bleiben somit gegen
Verschmutzung und Beschädigung gesichert.

Das Ausführungsbeispiel gemäß Fig.9 und 10 unterscheidet
sich von dem in Fig.1 bis 8 dargestellten nur in einigen
Einzelheiten, die im folgenden erläutert werden; alle
wesentlichen Bauteile, Ebenen und Abstände sind mit den
gleichen Bezugszeichen bezeichnet wie bisher.

Der am Sattel 20 befestigte Sicherungsstift 62 erstreckt
sich gemäß Fig.9 und 10 durch eine gabelförmige Aussparung im Vorsprung 56 jeder der beiden Bremsbacken 40 und
44. Diese Aussparung ist entgegen der Vorwärts-Drehrichtung D der Bremsscheibe 10, also nach hinten offen.

Anstelle der einen, gemäß Fig.1 bis 8 zum Niederhalten
der Bremsbacken 40 und 44 vorgesehenen Feder 64 ist gemäß Fig.9 und 10 jeder der Bremsbacken 40 und 44 eine
eigene Feder 66 zugeordnet. Jede der Federn 66 ist ähnlich einer Wäscheklammerfeder aus Draht geformt, umschlingt mit einer mittleren Windung einen am Vorsprung
56 der zugehörigen Rückenplatte 46 befestigten Hohlniet 68 und drückt von unten her mit einem hinteren Schenkel
gegen den Sicherungsstift 62 und mit einem vorderen
Schenkel gegen den Sattel 20, der für das Ende dieses
Schenkels eine Aussparung 70 aufweist.

Bei dem Ausführungsbeispiel gemäß Fig.9 und 10 werden
die bei Rückwärtsfahrt auftretenden Bremskräfte von den
Bremsbacken 40 und 44 über den Sicherungsstift 62 auf
den Sattel 20 übertragen. Bei Vorwärtsfahrt bleiben
Sattel 20 sowie Führungsbolzen 16 und 26 dagegen, wie
beim Ausführungsbeispiel gemäß Fig.1 bis 8, von Bremskräften entlastet, da diese unmittelbar von den Rükkenplatten 46 auf die Führungsflächen 52 des Bremsträgers 12 übertragen werden.

Das in Fig.11 und 12 dargestellte Ausführungsbeispiel
unterscheidet sich von dem vorangehenden dadurch, daß
die Federn 66 sich mit beiden freien Schenkelenden am
Sattel 20 abstützen, der dementsprechend ein Paar
Aussparungen 70 aufweist.

An der Rückenplatte 46 jeder der beiden Bremsbacken 40
und 44 sind zwei Arme 72 und 74 ausgebildet, die sich
nach vorne bzw. hinten erstrecken. Der vordere Arm 72
hat ein Langloch 76, durch das sich der Führungsbolzen
16 hindurcherstreckt. Am hinteren Arm 74 ist ein nach
vorne offener Haken 78 ausgebildet, durch den sich ein
am Bremsträger 12 befestigter, dünner Sicherungsstift 80
mit Spiel in Umfangsrichtung der Bremsscheibe 10 hindurcherstreckt.

Bei Vorwärtsfahrt werden die Bremskräfte, wie bei den
beiden vorangegangenen Ausführungsbeispielen, unmitelbar
von den Rückenplatten 46 auf die Führungsfläche 52 des
Bremsträgers 12 übertragen. Bei Rückwärtsfahrt auftre-

0119466

- 11 -

tende Bremskräfte werden über den Führungsbolzen 16 auf
den Bremsträger 12 übertragen, ohne daß der Sattel 20
belastet wird.

Eine weitere Variante ergibt sich aus einer Kombination
von in Fig.9 und 10 sowie in Fig.11 und 12 dargestellten
Merkmalen in der Weise, daß die Bremsbacken 40 und 44
wie in Fig.11 und 12 am Führungsstift 16 und zusätzlich
wie in Fig. 9 und 10 am Sicherungsstift 62 aufgehängt
sind, an dem sich zugleich die Federn 66 abstützen.

5676

PATENTANWÄLTE

**WUESTHOFF - v. PECHMANN - BEHRENS - GOETZ**

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2
TELEFON: (089) 66 20 51
TELEGRAMM: PROTECTPATENT
TELEX: 524 070

EP-57 850
Lucas Industries plc

15. Februar 1984

## P a t e n t a n s p r ü c h e :

1.    Teilbelag-Scheibenbremse für Fahrzeuge mit
- einem Bremsträger (12), der den Rand einer Bremsscheibe (10) umgreift,
- einem Paar Bremsbacken (40, 44), die auf je einer Seite der Bremsscheibe (10) angeordnet und am Bremsträger (12) geführt sind,
- einem Paar Führungsbolzen (16, 26), die am Bremsträger (12) mindestens annähernd parallel zur Bremsscheibenachse (A) in unterschiedlichen radialen Abständen von dieser angeordnet sind,
- einem Sattel (20), der auf den Führungsbolzen (16, 26) verschiebbar ist,
- und einer Betätigungsvorrichtung (36), die auf die eine Bremsbacke (40) unmittelbar und auf die andere Bremsbacke (44) über den Sattel (20) einwirkt und eine Betätigungsachse (B) hat, die zusammen mit der Bremsscheibenachse (A) eine radiale Mittelebene (C) definiert,
- wobei der Bremsträger (12) Führungsflächen (52, 54) für die Bremsbacken (40, 44) nur auf derjenigen Seite der Mittelebene (C) aufweist, die, bezogen auf die Drehrichtung (D) der Bremsscheibe (10) bei Vorwärtsfahrt, die Ablaufseite ist,
dadurch  g e k e n n z e i c h n e t ,
daß die Führungsbolzen (16, 26) beide in Abständen von der Mittelebene (C) auf der Ablaufseite angeordnet sind.

- 2 -

2.	Scheibenbremse nach Anspruch 1,
dadurch g e k e n n z e i c h n e t ,
daß der Bremsträger (12) ausschließlich an der Ablaufseite angeordnet ist und dort erst in einem Abstand von
der Mittelebene (C) beginnt.

3.	Scheibenbremse nach Anspruch 1 oder 2,
dadurch g e k e n n z e i c h n e t,
daß die gemeinsame Ebene (G) der geometrischen Achsen
(E, F) der beiden Führungsbolzen (16, 26) zumindest
annähernd auch die Bremsscheibenachse (A) enthält.

4.	Scheibenbremse nach einem der Ansprüche 1 bis 3,
dadurch g e k e n n z e i c h n e t ,
- daß der radial äußere Führungsbolzen (16) nahe der
Wirkungslinie der resultierenden Umfangskraft (U1) auf
der Auflaufseite der Bremsbacken (40, 44) liegt
- und der andere Führungsbolzen (26) radial innerhalb
der Wirkungslinie der resultierenden Umfangskraft (U2)
auf der Ablaufseite der Bremsbacken (40,44) in einem
Abstand von dieser Wirkungslinie angeordnet ist, der
ungefähr halbsogroß ist wie der Abstand der Führungsbolzen (16,18) voneinander.

5.	Scheibenbremse nach Anspruch 4,
dadurch g e k e n n z e i c h n e t ,
- daß der radial äußere Führungsbolzen (16) in geringem
Abstand radial innerhalb der Wirkungslinie der resultierenden Umfangskraft (U1) auf der Auflaufseite der Bremsbacken (40,44) liegt
- und der andere Führungsbolzen (26) soweit radial innerhalb der Wirkungslinie der resultierenden Umfangskraft (U2) auf der Ablaufseite der Bremsbacken (40,44)
liegt, daß die bei Rückwärtsfahrt auftretenden Umfangskräfte zu 65 bis 80 % vom äußeren Führungsbolzen (16)
und nur zu 35 bis 20 % vom inneren Führungsbolzen (26)
aufgenommen werden.

6.    Scheibenbremse nach einem der Ansprüche 1 bis 5,
dadurch  g e k e n n z e i c h n e t ,
- daß der Sattel (20) an der Seite, die bei Vorwärtsfahrt die Auflaufseite ist, eine der Mittelebene (C) zugewandte Führungsfläche (58) aufweist, an der sich je
ein über den Rand der Bremsscheibe (10) hinausragender
Vorsprung (56) der beiden Bremsbacken (40, 44) beim
Bremsen bei Rückwärtsfahrt abstützt,
- und der Bremsträger (12) an der Ablaufseite Führungsflächen (54) aufweist, die sich zumindest annähernd normal zur Mittelebene (C) erstrecken.

7. Scheibenbremse nach einem der Ansprüche 1 bis 6,
dadurch  g e k e n n z e i c h n e t ,
daß der Abstand (H) der beiden Führungsbolzen (16,26)
voneinander kleiner ist als die in Umfangsrichtung der
Bremsbacken (40,44) gemessene größte Länge (J) von deren
mit der Bremsscheibe (10) zusammenwirkenden Teilen
(Bremsbeläge 48).

8. Scheibenbremse nach Anspruch 7,
dadurch  g e k e n n z e i c h n e t ,
daß der Abstand (H) der beiden Führungsbolzen (16,26)
voneinander ungefähr so groß ist wie die in radialer
Richtung der Bremsscheibe (10) gemessene größte Breite
(K) von deren mit der Bremsscheibe (10) zusammenwirkenden Teilen (Bremsbeläge 48).

5676

**FIG.1**

**FIG.2**

FIG.4

FIG.3

FIG.6

FIG.5

**FIG.7**

E 16

0,72 U

26

F 0,28 U

**FIG.8**

58

U

E

G

F

U1 U2 B C A

0119466

4/4

FIG.9

FIG.10

0119466

FIG.11

FIG.12

# 0119466

EUROPÄISCHES Patentamt

**EUROPÄISCHER RECHERCHENBERICHT**

Nummer der Anmeldung

EP 84 10 1531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 072 775 (NISSIN KOGYO K.K.)<br>* Insgesamt; Figuren 1-13 * | 1-5,7 | F 16 D 55/224 |
| A | GB-A-2 033 988 (AISIN SEIKI K.K.)<br>* Insgesamt; Figuren 1-7 * | 1,6 | |
| A | GB-A-2 060 093 (AKEBONO BRAKE INDUSTRIES) | | |
| A | DE-A-2 843 146 (SUMITOMO ELECTRIC INDUSTRIES) | | |
| A,D | DE-A-2 807 620 (SUMITOMO ELECTRIC INDUSTRIES) | | RECHERCHIERTE SACHGEBIETE (Int. Cl. 3) |
| A,D | DE-A-3 132 796 (TOKICO LTD.) | | F 16 D 55/00 |

Der vorliegende Recherchenbericht wurde für alle Patentansprüche erstellt.

| Recherchenort | Abschlußdatum der Recherche | Prüfer |
|---|---|---|
| DEN HAAG | 17-05-1984 | BRAEMS C.G.I. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82